# EUROPÄISCHE PATENTSCHRIFT

(11) **EP 0 391 012 B1**
(45) Veröffentlichungstag und Bekanntmachung des Hinweises auf die Patenterteilung: **22.06.1994**
(21) Anmeldenummer: 89730097.6
(22) Anmeldetag: 07.04.1989
(51) Int. Cl.: H01B 7/28, H01B 3/44, C08L 23/22

(54) **Extrudierbare Mischung auf Polymerbasis für elektrische Kabel und elektrisches Kabel mit einem Innenmantel aus dieser Mischung**
Extrudable polymer blend for electric cables, and electric cable inner layer containing same
Mélange polymère extrudable pour câble électrique et gaine interne pour câble électrique, fabriquée à partir de ce mélange

(43) Veröffentlichungstag der Anmeldung: 10.10.1990
(73) Patentinhaber: SIEMENS AKTIENGESELLSCHAFT, 80333 München (DE)
(72) Erfinder: Kammel, Gernot, Dr., D-1000 Berlin 28 (DE); Krüger, Wolfgang, Dr., D-1000 Berlin 22 (DE)

(56) Entgegenhaltungen:
- EP-A- 0 022 745
- EP-A- 0 246 726
- WO-A-88/10000
- FR-A- 2 378 337
- US-A- 3 999 003

## Beschreibung

Die Erfindung liegt auf dem Gebiet der elektrischen Kabel und befaßt sich mit der konstruktiven Vervollkommnung solcher Kabel, die einen aus Drähten aufgebauten Schirm aufweisen und im Bereich dieses Schirmes mit einem hochwirksamen Schutz gegen die Längsausbreitung von Wasser ausgestattet sind.

Zur längswasserdichten Ausgestaltung von Starkstromkabeln mit einer Kunststoffisolierung und mit einem aus Kupferdrähten aufgebauten Schirm hat sich als wirksame Maßnahme im Schirmbereich die hohlraumfreie Ausfüllung dieses Bereiches mittels eines extrudierten, dauerplastischen Innenmantels auf Gummibasis erwiesen. Dabei wird die Grenzfläche Ader/Innenmantel zusätzlich mit einer unter dem Drahtschirm angeordneten Bewicklung aus Carbon-Kreppapier als Polster und aus einem Quellband abgedichtet. Eine zusätzliche Querwasserdichtigkeit des Kabels läßt sich durch einen sogenannten Schichtenmantel oder auch durch einen Metallmantel erreichen (Zeitschrift "etz", Band 103, 1982, Seite 173 bis 176).

Um den fertigungstechnischen Aufwand von Kabeln mit längswasserdichtem Schirmbereich zu verringern, ist es bekannt, auf die Bewicklung aus Carbon-Kreppapier und Quellvlies-Band zu verzichten und diese Bewicklung durch eine extrudierte Schicht aus einem elektrisch leitfähigen Polymer auf EPR-Basis zu ersetzen, so daß die Schirmdrähte zwischen der leitfähigen Polymerschicht und dem Innenmantel eingebettet sind. Der als "weitere Schicht der Polymerumhüllung der Schirmdrähte" bezeichnete Innenmantel soll dabei nichtleitend ausgebildet sein, also keine leitenden Zusätze wie Ruß oder Graphit aufweisen. - Für eine solche Ausgestaltung des Schirmbereiches sind also weiterhin drei Arbeitsschritte erforderlich, nämlich das Aufbringen der inneren Polymerschicht, das Aufseilen der Schirmdrähte und das Aufbringen der äußeren Polymerschicht (Innenmantel) (DE-U-84 14 886).

Für mehradrige elektrische Energieübertragungskabel ist weiterhin eine Innenmantelmischung bekannt, die als Basispolymer ein Copolymer von Alpha-Olefinen oder Verschnitte solcher Copolymere mit anderen Polymeren wie Styrol-Butadien- Kautschuk, chloriertem Polyäthylen oder Butylkautschuk enthält und die als Füllstoff Kreide sowie gegebenenfalls als leitfähige Komponente einen Ruß der Bezeichnung Ketjenblack EC enthält. Ein Innenmantel aus einer derartigen Mischung führt weder bei der Herstellung des Kabels noch beim anschließenden Betrieb des Kabels zu einem Verkleben mit der Aderisolierung (DE-A-29 48 425). - Weiterhin ist es bekannt, für den Innenmantel eines elektrischen Kabels eine unvulkanisierte Mischung auf der Basis von EPR oder EPDM zu verwenden, die eine Gleitmittelkombination aus hochschmelzenden Wachsen und Paraffinen sowie ein Wachs aus einer Kombination von polaren Verbindungen und grenzflächenaktiven Substanzen mit aktiven Füllstoffen und Emulsionsweichmachern enthält (DE-B-23 05 444).

Zur Längsabdichtung vieldrähtiger Leiter von Starkstromkabeln ist weiterhin eine bei Temperaturen über 100° mittels Pumpen förderbare Mischung auf Polymerbasis bekannt, die außer Verarbeitungshilfsmitteln einen mineralischen Füllstoff und ein pulverförmiges Quellmittel aus einem Polyacrylsäuresalz enthält (EP 0 246 726 - A3).

Ausgehend von einer extrudierbaren Mischung gemäß dem Oberbegriff des Patentanspruches 1 und einem elektrischen Kabel gemäß dem Oberbegriff des Patentanspruches 5 bzw. des Patentanspruches 6 liegt der Erfindung die Aufgabe zugrunde, eine extrudierbare Mischung anzugeben, die es ermöglicht, den abgedichteten Schirmbereich eines elektrischen Kabels kostengünstiger herzustellen und im Falle eines querwasserdichten Kabelmantels auch im Grenzbereich zwischen Innen- und Außenmantel die Längswasserdichtigkeit zu gewährleisten.

Zur Lösung dieser Aufgabe ist gemäß der Erfindung vorgesehen, daß die Mischung als Basispolymer Butylkautschuk in einer Menge von 10 bis 35 Gewichts-% und als weitere Zusätze 5 bis 30 Gewichts-% eines pulverförmigen anorganischen Quellmittels aus Polyacrylsäuresalzen, 5 bis 25 Gewichts-% eines wachsartigen Verarbeitungshilfsmittels und 5 bis 40 Gewichts-% eines inneren Weichmachers in Form von Polyoctenameren enthält.

Der Einsatz einer solchen Mischung ermöglicht es, auf die bisher übliche Spaltabdichtung zwischen dem Gummiinnenmantel und der äußeren Leitschicht des Kabels zu verzichten, da gegebenenfalls das Ansammeln von freiem Wasser im Grenzbereich Ader/Innenmantel durch den Zusatz des organischen Quellmittels zu dem Basispolymer des Innenmantels abgeblockt wird. Eine Abblockung kommt gegebenenfalls auch zwischen dem Innenmantel und dem Außenmantel zum Tragen. Als organisches Quellmittel kommen insbesondere Natriumsalze von vernetzten Polyacrylsäuren in Betracht. Um eine homogene Verteilung dieses Quellmittels in der Mischung und eine ausreichende und schnelle Quellung bei Wassereinwirkung zu gewährleisten, sollte die Korngröße des Quellmittels im Bereich von 50 bis 1000 »m, vorzugsweise bei 100 bis 500 »m, liegen.

Durch eine Zugabe von Ruß zu der Mischung wird ein guter elektrischer Kontakt zwischen der äußeren Leitschicht des Kabels und den Schirmdrähten sowie den Schirmdrähten untereinander und gegebenenfalls zwischen den Schirmdrähten und einer Metallschicht des Kabelmantels gewährleistet. Hierbei empfiehlt sich die Verwendung eines speziellen hochleitfähigen Rußes, wie er am Markt beispielsweise unter der Bezeichnung "Ketjenblack EC" erhältlich ist. Die Verwendung eines solchen Rußes ermöglicht bereits bei geringen Mengen von 2 bis 20, insbesondere von 3 bis 8 Gewichts-% eine ausreichende Leitfähigkeit der Mischung, die zweckmäßig einen spezifischen Widerstand von 10 bis 10⁴ Ohm . cm, insbesondere von 50 bis 10³ Ohm . cm, aufweist.

Insbesondere bei Füllstoffanteilen, die mehr als das Doppelte des Basispolymer- Anteils betragen, wird die Verarbeitbarkeit der Mischung durch den inneren Weichmacher verbessert. Ein geeigneter Weichmacher ist z. B. das Handelsprodukt "Vestenamer 8012" der Firma Hüls. Die Verwendung eines solchen inneren Weichmachers, der sich durch eine bei Raumtemperatur hohe Viskosität und eine bei Verarbeitungstemperatur extrem niedrige Viskosität auszeichnet, bewirkt eine leichtere Füllstoffaufnahme der Mischung, eine bessere Füllstoffverteilung und eine Reduzierung der Mischungsviskosität bei der Verarbeitung.

Beim konstruktiven Aufbau eines im Schirmbereich abgedichteten elektrischen Kabels kann - wie bereits erwähnt - die bisher übliche Spaltabdichtung zwischen Innenmantel und äußerer Leitschicht in Form einer Bespinnung aus Polsterband und/oder Quellband entfallen. Das eröffnet die Möglichkeit, die Herstellung des gegen die Längsausbreitung von Wasser abgedichteten Schirmbereiches in nur zwei Arbeitsschritten vorzunehmen, nämlich dem Aufseilen der Schirmdrähte - gegebenenfalls in Kombination mit einem Längseinlauf des Polsterbandes - und dem Aufbringen des Innenmantels.

Insgesamt zeichnet sich die neue Mischung auch dadurch aus, daß sie keine migrierenden Bestandteile enthält, die in die äußere Leitschicht oder die darunterliegende Kabelisolierung einwandern könnten.

Der Einsatz einer leitfähigen Innenmantelmischung kommt insbesondere für querwasserdichte Kabel in Betracht, also für solche Kabel, die entweder einen Metallmantel oder einen sogenannten Schichtenmantel aufweisen.

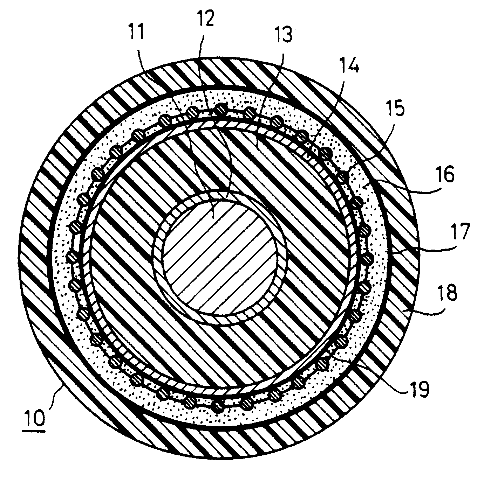

Ein Ausführungsbeispiel einer gemäß der Erfindung ausgebildeten extrudierbaren Mischung ist nachfolgend angegeben, während ein Ausführungsbeispiel für ein gemäß der Erfindung ausgebildetes elektrisches Kabel in der Figur dargestellt ist.

| Innenmantelmischung | |
|---|---|
| Basispolymer Butylkautschuk | 18 Gewichts-% |
| Füllstoff Kreide | 48 Gewichts-% |
| Verarbeitungshilfsmittel A-Wachs | 8 Gewichts-% |
| Innerer Weichmacher Polyoctenamer | 10 Gewichts-% |
| Quellmittel vernetztes Natriumpolyacrylat | 10 Gewichts-% |
| Ruß Ketjenblack EC | 5,5 Gewichts-% |
| Verarbeitungshilfsmittel Stearinsäure | 0,5 Gewichts-% |

Die Figur zeigt im Querschnitt ein Hochspannungskabel 10, auf dessen Leiter 11 eine innere Leitschicht 12, darüber eine VPE-Isolierung 13 und darüber eine extrudierte äußere Leitschicht 14 und eine Polsterschicht 19 aus Carbon-Kreppapier aufgebracht sind. Auf die Polsterschicht 19 ist ein aus Kupferdrähten 15 bestehender Schirm aufgeseilt, auf den seinerseits der Innenmantel 16 aus einer Mischung gemäß dem Beispiel 1 aufgebracht ist. Darüber befindet sich der Außenmantel in Form eines Schichtenmantels mit der dünnen Metallfolie 17 und dem Kunststoffmantel 18.

## Patentansprüche

1. Extrudierbare Mischung auf Polymerbasis für elektrische Kabel, mit Kreide als Füllstoff und mit weiteren Zusätzen,
**dadurch gekennzeichnet,**
daß die Mischung als Basispolymer Butyl-Kautschuk in einer Menge von 10 bis 35 Gewichts-%
und als weitere Zusätze
5 bis 30 Gewichts-% eines pulverförmigen anorganischen Quellmittels aus Polyacrylsäuresalzen,
5 bis 25 Gewichts-% eines wachsartigen Verarbeitungshilfsmittels und
5 bis 40 Gewichts-% eines inneren Weichmachers in Form von Polyoctenameren
enthält.

2. Extrudierbare Mischung nach Anspruch 1, **dadurch gekennzeichnet,** daß als anorganisches Quellmittel Natriumsalze von vernetzten Polyacrylsäuren verwendet werden.

3. Extrudierbare Mischung nach Anspruch 1 oder 2, **dadurch gekennzeichnet,** daß die Korngröße des Quellmittels 50 bis 1000 »m, vorzugsweise 100 bis 500 »m beträgt.

4. Extrudierbare Mischung nach einem der Ansprüche 1 bis 3, **dadurch gekennzeichnet,** daß als weitere Mischungskomponente ein hochleitfähiger Ruß in einer Menge von 2 bis 20, vorzugsweise 3 bis 8 Gewichts-% zugesetzt ist.

5. Elektrisches Kabel, das im äußeren Bereich eine Leitschicht, einen Drahtschirm, einen auf den Drahtschirm aufgebrachten Innenmantel und einen Außenmantel aufweist, **dadurch gekennzeichnet,** daß der Drahtschirm (15) unmittelbar auf die Leitschicht (14) bzw. auf eine auf die Leitschicht aufgebrachte Polsterschicht (19) aus einem leitenden Band aufgebracht ist und daß der Innenmantel (16) aus einer nichtvulkanisierten Mischung gemäß einem der Ansprüche 1 bis 3 besteht.

6. Elektrisches Kabel, das im äußeren Bereich eine Leitschicht, einen Dahtschirm, einen auf den Drahtschirm aufgebrachten Innenmantel und einem querwasserdichten Außenmantel aufweist, **dadurch gekennzeichnet,** daß der Drahtschirm unmittelbar auf die Leitschicht (14) bzw. auf eine auf die Leitschicht aufgebrachte Polsterschicht (19) aus einem leitenden Band aufgebracht ist und daß der Innenmantel (16) aus einer unvulkanierten Mischung gemäß Anspruch 4 besteht.

## Claims

1. Extrudable polymer-based mixture for electrical cables, having chalk as a filler and having further additives, characterised in that the mixture contains 10 to 35% by weight of butyl rubber as the base polymer
and as further additives
5 to 30% by weight of a powdered inorganic swelling agent made of polyacrylic acid salts,
5 to 25% by weight of a wax-like auxiliary processing agent, and
5 to 40% by weight of an internal plasticizer in the form of polyoctenamers.

2. Extrudable mixture according to claim 1, characterised in that sodium salts of cross-linked polyacrylic acids are used as the inorganic swelling agent.

3. Extrudable mixture according to claim 1 or 2, characterised in that the grain size of the swelling agent is 50 to 1000 »m, preferably 100 to 500 »m.

4. Extrudable mixture according to one of claims 1 to 3, characterised in that 2 to 20% by weight and preferably 3 to 8% by weight of highly conductive carbon black is added as a further component of the mixture.

5. Electrical cable which has, in the outer region, a semi-conducting layer, a wire screen, an inner sheath applied to the wire screen and an outer sheath, characterised in that the wire screen (15) is applied directly to the semi-conducting layer (14) or to a padding layer (19) made of a conductive tape and applied to the semi-conducting layer, and in that the inner sheath (16) consists of an unvulcanized mixture according to one of claims 1 to 3.

6. Electrical cable which has, in the outer region, a semi-conducting layer, a wire screen, an inner sheath applied to the wire screen and a laterally water-tight outer sheath, characterised in that the wire screen is applied directly to the semi-conducting layer (14) or to a padding layer (19) made of a conductive tape and applied to the semi-conducting layer, and in that the inner sheath (16) consists of an unvulcanized mixture according to claim 4.

## Revendications

1. Mélange extrudable à base de polymère pour câble électrique, comprenant de la craie comme charge et d'autres additifs, caractérisé en ce que :
- le mélange contient comme polymère de base du caoutchouc-butyl en une quantité de 10 à 35%.
- et comme autres additifs
de 5 à 30% poids d'un agent gonflant minéral, sous forme de poudre en sels d'acides polyacrylique
de 5 à 25% poids d'un adjuvant de traitement de type cire
de 5 à 40% poids d'un plastifiant interne sous forme de polyoctènamère.

2. Mélange extrudable selon la revendication 1, caractérisé en ce que des sels de sodium d'acides polyacryliques réticulés sont utilisés comme agents gonflants minéral.

3. Mélange extrudable selon la revendication 1 ou 2, caractérisé en ce que la granulométrie de l'agent gonflant est de 50 à 1000 »m, et de préférence de 100 à 500 »m.

4. Mélange extrudable selon l'une des revendications 1 à 3, caractérisé en ce qu'il est ajouté, comme autre constituant du mélange, une suie très conductrice en une quantité de 2 à 20, et, de préférence, de 3 à 8% en poids.

5. Câble électrique qui comporte dans la partie extérieure une couche conductrice, un blindage en fil métallique, une gaine intérieure appliquée sur le blindage en fil métallique et une gaine extérieure, caractérisé en ce que le blindage (15) en fil métallique est appliqué directement sur la couche (14) conductrice ou sur une couche (19) de rembourrage appliquée sur la couche conductrice et constituée d'un ruban conducteur, et en ce que la gaine (16) intérieure est en un mélange non vulcanisé selon l'une des revendications 1 à 3.

6. Câble électrique qui comporte, en la partie extérieure, une couche conductrice, un blindage en fil métallique, une gaine intérieure appliquée sur le blindage en fil métallique et une gaine extérieure étanche au passage de l'eau transversalement, caractérisé en ce que le blindage en fil métallique est appliqué directement sur la couche (14) conductrice ou sur une couche (19) de rembourrage appliquée sur la couche conductrice et constituée d'un ruban conducteur, et en ce que la gaine (16) intérieure est en un mélange non vulcanisé suivant la revendication 4.
